# EUROPEAN PATENT APPLICATION

(11) **EP 4 319 306 A1**
(43) Date of publication of application: **07.02.2024**
(21) Application number: 22775361.3
(22) Date of filing: 16.03.2022
(51) Int. Cl.: H04W 36/14, H04W 48/18, H04W 68/12

(54) **DEVICE AND METHOD**

(30) Priority: 23.03.2021 JP 2021048512
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya-city, Aichi-pref 448-8661 (JP); TAKAHASHI, Hideaki, Kariya-city, Aichi-pref 448-8661 (JP)
(74) Representative: TBK
(86) International application number: PCT/JP2022/012078
(87) International publication number: WO 2022/202573

(57) **Abstract**

An apparatus according to an aspect of the present disclosure includes a communication processing unit configured to receive second information for configuring the apparatus to transmit a UE Assistance Information message including first information indicating an RRC state that is either an RRC idle state or an RRC inactive state. The communication processing unit is configured to transmit a LTE Assistance Information message including the first information to a first network based on the second information before a switch from the first network to a second network by the apparatus in an RRC connected state in the first network.

## Description

### CROSS-REFERENCE TO RELATED APPLICATIONS

This application is based on and claims the benefit of priority from Japanese Patent Application No. 2021-048512, filed on March 23, 2021, the entire content of which is incorporated herein by reference.

### Technical Field

The present disclosure relates to an apparatus and a method.

### Background Art

In 3rd Generation Partnership Project (3GPP) Release 17, a work item has been launched for formulating functions to monitor for incoming information (for example, sound or data) from networks of a plurality of telecommunications operators for devices each equipped with a plurality of subscriber identity module (SIM) cards.

For example, according to NPL 1, a technology has been studied of causing a user equipment (UE) to monitor for paging in a network B by setting a gap in communication in a network A even when the LTE is in a radio resource control (RRC) connected state in the network A. This technology is referred to as short-time switching.

Further, according to NPL 1, a technology has also been studied of causing the LTE to notify the network A that the LTE temporarily leaves the network A when the LTE has incoming information of high priority in the network B. This may prevent an RRC state mismatch between the network A and the UE. This technology is referred to as long-time switching.

Further, NPL 2 has described that an RRC state to which a UE is to transition at the time of leaving is configured in advance through RRC signaling for a leaving notification with no network response. In addition, NPL 3 has described that information on a cause of a temporarily stop (that is, leaving), a preferred RRC state (for example, either an RRC idle state or an RRC inactive state), or the like is transmitted to a network using a LTE ASSISTANCE INFORMATION message at the time of the temporary stop (that is, leaving).

### Citation List

### Non Patent Literature

NPL 1: 3GPP TSG-RAN WG2 Meeting #113-e, Online, Jan 25th- Feb 05th 2021, R2-2100474, vivo, "[post112-e] [256] [Multi-SIM] Network switching details (vivo)"
NPL 2: 3GPP TSG-RAN WG2 Meeting #113 Electronic, Elbonia, 25th of January - 5th of February 2021, R2-2100508, Nokia, Nokia Shanghai Bell, "Switching notification procedure for basic switching scenarios for Single RX UE"
NPL 3: 3GPP TSG-RAN WG2 Meeting #113e, Electronic, 25-Jan-2021 to 05-Feb-2021, R2-2100850, Apple Inc, "Methods for MUSIM Network Switching"

### Summary of the Invention

The inventors have revealed an issue that, although NPL 2 has described that an RRC state to which a UE is to transition at the time of leaving is configured in advance, NPL 2 has described nothing about a specific technique of reliably achieving the configuration with no unnecessary signaling. Further, the inventors have revealed an issue that, according to NPL 3, since a UE transmits information on the preferred RRC state to a network at the time of a switch between networks, confirms that the network receives the information, and then makes the switch, it may take a long time to make the switch between the networks.

An object of the present disclosure is to provide a user equipment, a base station, and a method that make it possible to reliably achieve a fast switch between mobile networks by the user equipment with no unnecessary signaling.

An apparatus according to an aspect of the present disclosure includes a communication processing unit configured to receive second information for configuring the apparatus to transmit a UE Assistance Information message including first information indicating an RRC state that is either an RRC idle state or an RRC inactive state. The communication processing unit is configured to transmit a LTE Assistance Information message including the first information to a first network based on the second information before a switch from the first network to a second network by the apparatus in an RRC connected state in the first network.

An apparatus in a first network according to an aspect of the present disclosure includes a communication processing unit configured to transmit, to a user equipment, second information for configuring the user equipment to transmit a UE Assistance Information message including first information indicating an RRC state that is either an RRC idle state or an RRC inactive state. The communication processing unit is configured to receive a UE Assistance Information message including the first information from the user equipment, the UE Assistance Information message being transmitted based on the second information before a switch from the first network to a second network by the user equipment in an RRC connected state in the first network.

A method performed by an apparatus according to an aspect of the present disclosure includes: receiving second information for configuring the apparatus to transmit a UE Assistance Information message including first information indicating an RRC state that is either an RRC idle state or an RRC inactive state; and transmitting a UE Assistance Information message including the first information to a first network based on the second information before a switch from the first network to a second network by the apparatus in an RRC connected state in the first network.

A method performed by an apparatus in a first network according to an aspect of the present disclosure includes: transmitting, to a user equipment, second information for configuring the user equipment to transmit a LTE Assistance Information message including first information indicating an RRC state that is either an RRC idle state or an RRC inactive state; and receiving a UE Assistance Information message including the first information from the user equipment, the UE Assistance Information message being transmitted based on the second information before a switch from the first network to a second network by the user equipment in an RRC connected state in the first network.

The present disclosure makes it possible to reliably achieve a fast switch between mobile networks by a user equipment with no unnecessary signaling. Note that the present disclosure may yield other advantageous effects instead of this advantageous effect or in addition to this advantageous effect.

### Brief Description of Drawings

FIG. 1 is an explanatory diagram illustrating an example of a schematic configuration of a system according to embodiments of the present disclosure.
FIG. 2 is an explanatory diagram for explaining an example of a case where a user equipment according to embodiments of the present disclosure is equipped with two SIM cards.
FIG. 3 is a block diagram illustrating an example of a schematic functional configuration of a base station according to embodiments of the present disclosure.
FIG. 4 is a block diagram illustrating an example of a schematic hardware configuration of the base station according to embodiments of the present disclosure.
FIG. 5 is a block diagram illustrating an example of a schematic functional configuration of the user equipment according to embodiments of the present disclosure.
FIG. 6 is a block diagram illustrating an example of a schematic hardware configuration of the user equipment according to embodiments of the present disclosure.
FIG. 7 is a sequence diagram for explaining an example of a schematic flow of processing according to embodiments of the present disclosure.
FIG. 8 is a sequence diagram for explaining an example of a schematic flow of processing according to a first modification example of embodiments of the present disclosure.

### Description of Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:
1. Configuration of System
2. Configuration of Base Station
3. Configuration of User Equipment
4. Operation Examples
5. Modification Examples

### <1. Configuration of System>

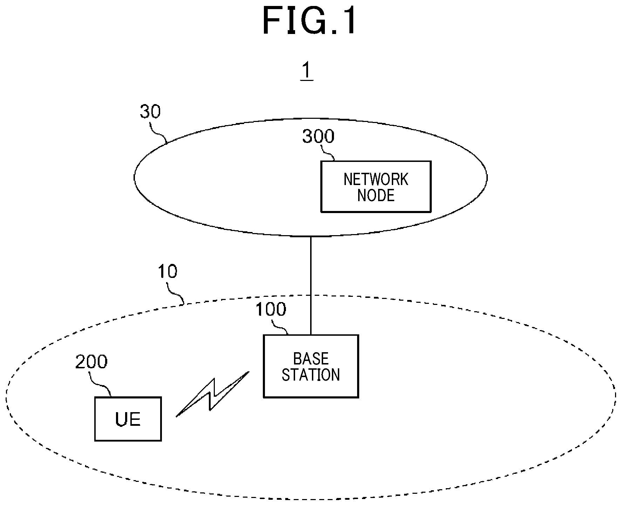

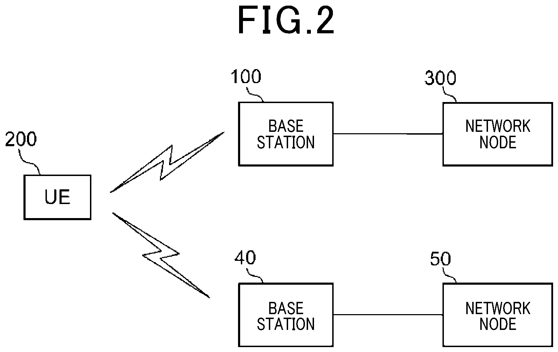

An example of a configuration of a system 1 according to embodiments of the present disclosure will be described with reference to FIGS. 1 and 2. Referring to FIG. 1, the system 1 includes a base station 100, a user equipment (LTE) 200, and a core network 30. The core network 30 includes a network node 300.

For example, the system 1 is a system compliant with technical specifications (TSs) in Third Generation Partnership Project (3GPP). More specifically, for example, the system 1 is a system compliant with the TSs of 5G or new radio (NR). Naturally, the system 1 is not limited to this example.

### (1) Base Station 100

The base station 100 is a node in a radio access network (RAN) and communicates with a LTE (for example, LTE 200) located within a coverage area 10 of the base station 100.

For example, the base station 100 communicates with a UE (for example, UE 200) using a RAN protocol stack. For example, the protocol stack includes protocols of radio resource control (RRC), service data adaptation protocol (SDAP), packet data convergence protocol (PDCP), radio link control (RLC), medium access control (MAC), and physical (PHY) layers. Alternatively, the protocol stack does not have to include all of these protocols, but may include some of these protocols.

For example, the base station 100 is a gNB. The gNB is a node that provides NR user plane and control plane protocol terminations towards a LTE and is connected to a 5G core network (5GC) via an NG interface. Alternatively, the base station 100 may be an en-gNB. The en-gNB is a node that provides NR user plane and control plane protocol terminations toward a LTE and operates as a secondary node in E-UTRA-NR dual connectivity (EN-DC).

The base station 100 may include a plurality of nodes. The plurality of nodes may include a first node that hosts higher layers included in the protocol stack and a second node that hosts lower layers included in the protocol stack. The higher layers may include the RRC layer, the SDAP layer, and the PDCP layer, while the lower layers may include the RLC layer, the MAC layer, and the PHY layer. The first node may be a central unit (CU) and the second node may be a distributed unit (DU). Note that the plurality of nodes may include a third node that performs lower processing of the PHY layer and the second node may perform higher processing of the PHY layer. The third node may be a radio unit (RU).

Alternatively, the base station 100 may be one of the plurality of nodes and may be connected to another unit of the plurality of nodes.

The base station 100 may be an integrated access and backhaul (IAB) donor or an IAB node.

### (2) UE 200

The UE 200 communicates with a base station. For example, the UE 200 communicates with the base station 100 when being located within the coverage area 10 of the base station 100.

For example, the LTE 200 communicates with a base station (for example, base station 100) using the protocol stack.

In particular, the UE 200 is capable of being equipped with two or more SIM cards. That is, the LTE 200 is a multi-SIM UE or a multi-SIM device. The LTE 200 is capable of performing communication in two or more mobile networks that correspond to the two or more SIM cards respectively. The mobile networks may be simply referred to as networks.

For example, the LTE 200 is capable of performing communication in a mobile network (hereinafter, referred to as "first mobile network") that corresponds to one of the two or more SIM cards and includes the base station 100 and the network node 300. Further, the UE 200 is capable of performing communication in a mobile network (hereinafter, referred to as "second mobile network") that corresponds to another one of the two or more SIM cards.

Referring to the example of FIG. 2, for example, the LTE 200 is capable of performing communication in the first mobile network including the base station 100 and the network node 300 and the second mobile network including a base station 40 and a network node 50. As an example, the UE 200 may be in an RRC connected state in the first mobile network and may be in either an RRC idle state or an RRC inactive state in the second mobile network. In such a case, for example, the UE 200 may receive a paging message transmitted by the base station 40 in the second mobile network while communicating with the base station 100 in the first mobile network.

### (3) Network Node 300

The network node 300 is a network function of the core network 30. For example, the network node 300 is an access and mobility management function (AMF).

### <2. Configuration of Base Station>

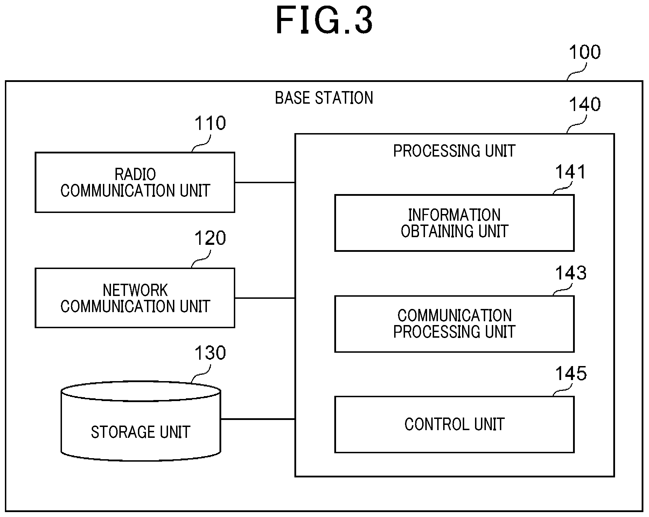

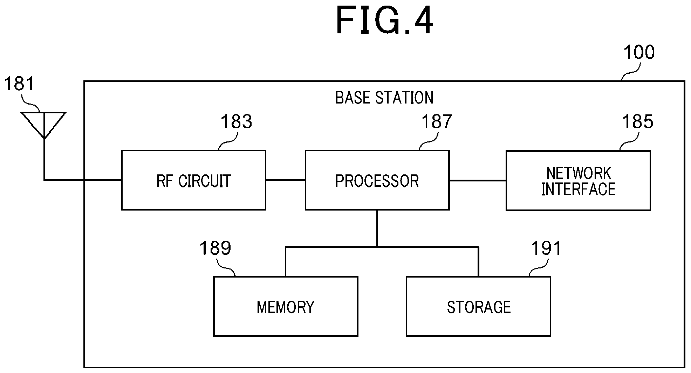

An example of a configuration of the base station 100 according to embodiments of the present disclosure will be described with reference to FIGS. 3 and 4.

### (1) Functional Configuration

First, an example of a functional configuration of the base station 100 according to embodiments of the present disclosure will be described with reference to FIG. 3. Referring to FIG. 3, the base station 100 includes a radio communication unit 110, a network communication unit 120, a storage unit 130, and a processing unit 140.

The radio communication unit 110 wirelessly transmits and receives signals. For example, the radio communication unit 110 receives a signal from a UE and transmits a signal to the UE.

The network communication unit 120 receives a signal from a network and transmits a signal to the network.

The storage unit 130 stores various kinds of information.

The processing unit 140 provides various functions of the base station 100. The processing unit 140 includes an information obtaining unit 141, a communication processing unit 143, and a control unit 145. Note that the processing unit 140 may further include another component in addition to these components. That is, the processing unit 140 may also perform an operation other than operations of these components. Specific operations of the information obtaining unit 141, the communication processing unit 143, and the control unit 145 will be described in detail later.

For example, the processing unit 140 (communication processing unit 143) communicates with a UE (for example, UE 200) via the radio communication unit 110. For example, the processing unit 140 communicates with another node (for example, the network node 300 in the core network 30 or another base station) via the network communication unit 120.

### (2) Hardware Configuration

Next, an example of a hardware configuration of the base station 100 according to embodiments of the present disclosure will be described with reference to FIG. 4. Referring to FIG. 4, the base station 100 includes an antenna 181, an RF circuit 183, a network interface 185, a processor 187, a memory 189, and a storage 191.

The antenna 181 converts signals into radio waves and emits the radio waves into the air. In addition, the antenna 181 receives radio waves in the air and converts the radio waves into signals. The antenna 181 may include a transmitting antenna and a receiving antenna or may be a single antenna for transmission and reception. The antenna 181 may be a directional antenna and may include a plurality of antenna elements.

The RF circuit 183 performs analog processing on signals that are transmitted and received via the antenna 181. The RF circuit 183 may include a high-frequency filter, an amplifier, a modulator, a lowpass filter, and the like.

The network interface 185 is, for example, a network adaptor and transmits a signal to a network and receives a signal from the network.

The processor 187 performs digital processing on signals that are transmitted and received via the antenna 181 and the RF circuit 183. The digital processing includes processing of the RAN protocol stack. The processor 187 also performs processing on signals that are transmitted and received via the network interface 185. The processor 187 may include a plurality of processors or may be a single processor. The plurality of processors may include a baseband processor that performs the digital processing and one or more processors that perform other processing.

The memory 189 stores a program to be executed by the processor 187, a parameter related to the program, and other various kinds of information. The memory 189 may include at least one of a read only memory (ROM), an erasable programmable read only memory (EPROM), an electrically erasable programmable read only memory (EEPROM), a random access memory (RAM), and a flash memory. The whole or part of the memory 189 may be included in the processor 187.

The storage 191 stores various kinds of information. The storage 191 may include at least one of a solid state drive (SSD) and a hard disk drive (HDD).

The radio communication unit 110 may be implemented by the antenna 181 and the RF circuit 183. The network communication unit 120 may be implemented by the network interface 185. The storage unit 130 may be implemented by the storage 191. The processing unit 140 may be implemented by the processor 187 and the memory 189.

Part or the whole of the processing unit 140 may be virtualized. In other words, part or the whole of the processing unit 140 may be implemented as a virtual machine. In this case, the part or the whole of the processing unit 140 may operate as a virtual machine on a physical machine (that is, hardware) including a processor, a memory, and the like and a hypervisor.

Given the hardware configuration described above, the base station 100 may include a memory (that is, memory 189) that stores a program and one or more processors (that is, processor 187) capable of executing the program and the one or more processors may be configured to execute the program to perform operations of the processing unit 140. The program may be a program for causing the processors to execute the operations of the processing unit 140.

### <3. Configuration of User Equipment>

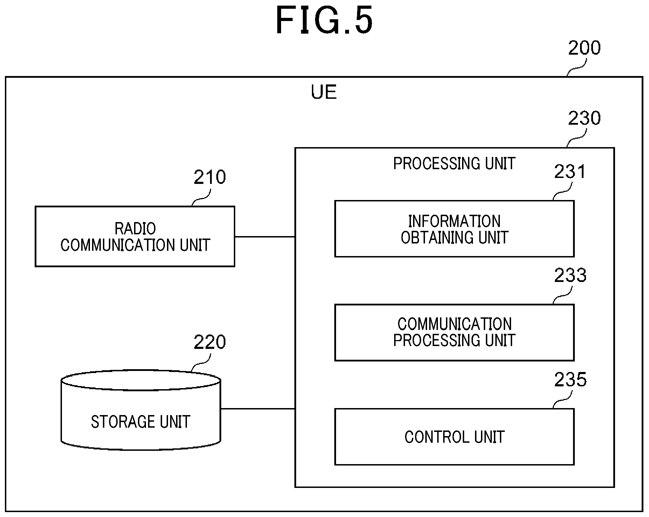

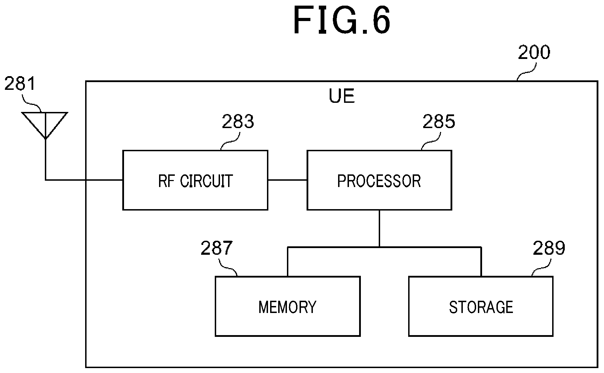

An example of a configuration of the UE 200 according to embodiments of the present disclosure will be described with reference to FIGS. 5 and 6.

### (1) Functional Configuration

First, an example of a functional configuration of the UE 200 according to embodiments of the present disclosure will be described with reference to FIG. 5. Referring to FIG. 5, the UE 200 includes a radio communication unit 210, a storage unit 220, and a processing unit 230.

The radio communication unit 210 wirelessly transmits and receives signals. For example, the radio communication unit 210 receives a signal from a base station and transmits a signal to the base station. For example, the radio communication unit 210 receives a signal from another UE and transmits a signal to the other UE.

The storage unit 220 stores various kinds of information.

The processing unit 230 provides various functions of the UE 200. The processing unit 230 includes an information obtaining unit 231, a communication processing unit 233, and a control unit 235. Note that the processing unit 230 may further include another component in addition to these components. That is, the processing unit 230 may also perform an operation other than operations of these components. Specific operations of the information obtaining unit 231, the communication processing unit 233, and the control unit 235 will be described in detail later.

For example, the processing unit 230 (communication processing unit 233) communicates with a base station (for example, the base station 100 or the base station 40) or another UE via the radio communication unit 210.

### (2) Hardware Configuration

Next, an example of a hardware configuration of the UE 200 according to embodiments of the present disclosure will be described with reference to FIG. 6. Referring to FIG. 6, the UE 200 includes an antenna 281, an RF circuit 283, a processor 285, a memory 287, and a storage 289.

The antenna 281 converts signals into radio waves and emits the radio waves into the air. In addition, the antenna 281 receives radio waves in the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The processor 285 performs digital processing on signals that are transmitted and received via the antenna 281 and the RF circuit 283. The digital processing includes processing of the RAN protocol stack. The processor 285 may include a plurality of processors or may be a single processor. The plurality of processors may include a baseband processor that performs the digital processing and one or more processors that perform other processing.

The memory 287 stores a program to be executed by the processor 285, a parameter related to the program, and other various kinds of information. The memory 287 may include at least one of a ROM, an EPROM, an EEPROM, a RAM, and a flash memory. The whole or part of the memory 287 may be included in the processor 285.

The storage 289 stores various kinds of information. The storage 289 may include at least one of an SSD and an HDD.

The radio communication unit 210 may be implemented by the antenna 281 and the RF circuit 283. The storage unit 220 may be implemented by the storage 289. The processing unit 230 may be implemented by the processor 285 and the memory 287.

The processing unit 230 may be implemented by a system on a chip (SoC) including the processor 285 and the memory 287. The SoC may include the RF circuit 283 and the radio communication unit 210 may also be implemented by the SoC.

Given the hardware configuration described above, the LTE 200 may include a memory (that is, memory 287) that stores a program and one or more processors (that is, processor 285) capable of executing the program and the one or more processors may be configured to execute the program to perform operations of the processing unit 230. The program may be a program for causing the processors to execute the operations of the processing unit 230.

### <4. Operation Examples>

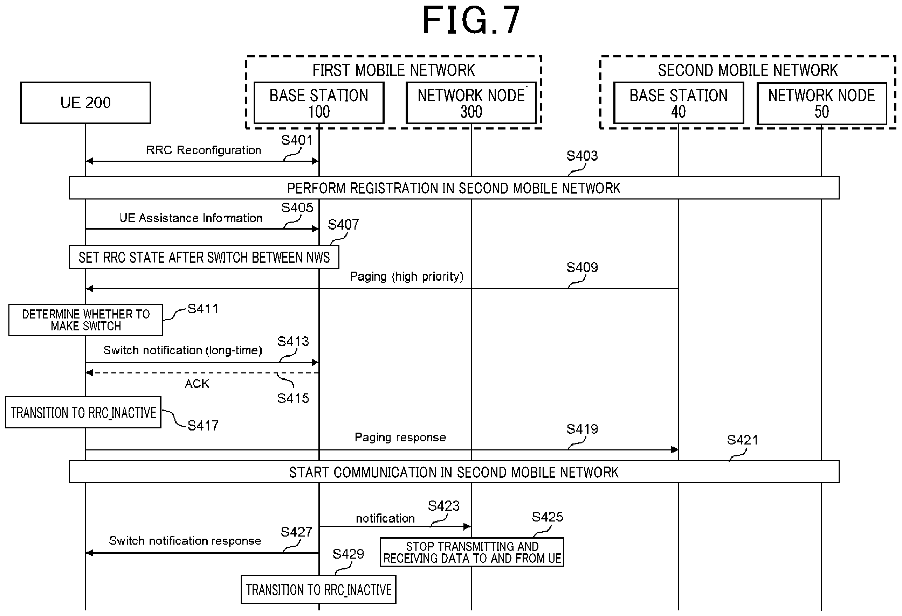

Examples of operations of the base station 100 and the UE 200 according to embodiments of the present disclosure will be described with reference to FIG. 7.

### (1) Transmission and Reception of State Transition Information

The LTE 200 (information obtaining unit 231) obtains state transition information indicating an RRC state to which the UE 200 is to transition when making a switch from the first mobile network to the second mobile network. The UE 200 (communication processing unit 233) transmits a UE Assistance Information message including the state transition information to the base station 100 in the first mobile network in response to registration of the LTE 200 in the second mobile network.

The base station 100 (communication processing unit 143) receives the UE Assistance Information message including the state transition information from the LTE 200. The base station 100 (information obtaining unit 141) obtains the state transition information.

The RRC state indicated by the state transition information is set in each of the base station 100 and the UE 200 as the RRC state of the UE 200 after the switch.

### - RRC State

The RRC state is either the RRC idle state or the RRC inactive state.

As described above, the RRC state is an RRC state to which the LTE 200 is to transition at the time of the switch. Since the LTE 200 autonomously releases an RRC connection at the time of the switch, it is also possible to refer to the RRC state as an RRC state to which the LTE 200 is to transition in response to the autonomous release of the RRC connection by the UE 200.

### - Configuration of Transmission of State Transition Information

For example, the base station 100 (information obtaining unit 141) obtains configuration information for configuring the UE 200 to transmit the state transition information. The base station 100 (communication processing unit 143) transmits an RRC Reconfiguration message including the configuration information to the UE 200. For example, since the UE 200 has multi-SIM capability, the base station 100 transmits the configuration information to the UE 200.

For example, the UE 200 (communication processing unit 233) receives the RRC Reconfiguration message including the configuration information from the base station 100. The UE 200 (information obtaining unit 231) obtains the configuration information. For example, the UE 200 (communication processing unit 233) transmits the state transition information to the base station 100 under the condition that the UE 200 (communication processing unit 233) receives the configuration information.

### - Transmission Timing

As described above, the UE 200 (communication processing unit 233) transmits the UE Assistance Information message including the state transition information to the base station 100 in response to registration of the UE 200 in the second mobile network. More specifically, the UE 200 (communication processing unit 233) transmits the UE Assistance Information message to the base station 100 in response to the completion of the registration.

For example, the LTE 200 (communication processing unit 233) performs the registration at the time of attach to the second mobile network or at the time of location registration in the second mobile network.

For example, the UE 200 (communication processing unit 233) transmits a REGISTRATION REQUEST message to the network node 50 via the base station 40 and receives a REGISTRATION ACCEPT message from the network node 50 via the base station 40 as procedures for the registration in the second mobile network. The REGISTRATION REQUEST message and the REGISTRATION ACCEPT message are non-access stratum (NAS) messages.

As described above, the state transition information is transmitted and received. This makes it possible, for example, to reliably achieve a fast switch to the second mobile network by the LTE 200 with no unnecessary signaling. More specifically, since the state transition information is necessary for the base station 100 after the registration in the second mobile network, the state transition information is not thus transmitted until necessary. That is, since the state transition information is not transmitted when unnecessary, unnecessary signaling is avoided. In addition, since the state transition information is transmitted to the base station 100 in response to the registration in the second mobile network, the base station 100 can obtain the state transition information before paging happens to the UE 200 in the second mobile network. Therefore, the UE 200 can reliably switch to the second mobile network fast. In addition, the UE 200 can autonomously transmit the state transition information to the base station 100 in response to the registration in the second mobile network, by the use of a LTE ASSISTANCE INFORMATION message.

### (2) Switch between Networks

For example, the UE 200 (communication processing unit 233) transmits, to the first mobile network, a message for a notification of the switch.

### - Message

For example, the message is an RRC message for the notification of the switch. In this case, the LTE 200 (communication processing unit 233) transmits the message to the base station 100. The base station 100 (communication processing unit 143) receives the message from the UE 200.

### - RRC State Transition

For example, the UE 200 (control unit 235) causes the UE 200 to transition to the RRC state (for example, either the RRC idle state or the RRC inactive state) in response to the reception of an acknowledgment (ACK) corresponding to the message for the notification of the switch. For example, the ACK may be an ACK of the RLC layer that is a protocol of a layer 2 or may be an ACK of a hybrid automatic repeat request (HARQ) of the MAC layer that is a protocol of the layer 2. This causes, for example, the reception of the message to be at least confirmed and causes a fast switch to be made.

Meanwhile, for example, the base station 100 (control unit 145) causes the LTE 200 to transition to the RRC state in the base station 100 in response to the reception of the message. That is, the RRC state of the UE 200 maintained in the base station 100 is changed to the RRC state indicated by the state transition information.

Such a switch allows the LTE 200 to perform communication in the second mobile network even in the RRC connected state in the first mobile network. In addition, the state transition information may prevent an RRC state mismatch between the first network (base station 100 in particular) and the UE 200.

### (3) Flow of Processing

An example of processing according to embodiments of the present disclosure will be described with reference to FIG. 7.

An RRC Reconfiguration procedure is performed between the UE 200 and the base station 100 (S401). For example, the base station 100 transmits, to the UE 200, an RRC Reconfiguration message including configuration information for configuring the LTE 200 to transmit state transition information.

The LTE 200 performs a procedure for registration in the second mobile network (S403).

The LTE 200 transmits a LTE Assistance Information message to the base station 100 in response to the registration (S405). The UE Assistance Information message includes state transition information indicating an RRC state to which the UE 200 is to transition when making a switch from the first mobile network to the second mobile network. The base station 100 receives the UE Assistance Information message and obtains the state transition information. The UE 200 and the base station 100 set the RRC state as an RRC state of the UE 200 after the switch between the networks (S407). For example, the RRC state is the RRC inactive state.

The UE 200 receives a paging message from the base station 40 (S409). The paging message includes identification information of the LTE 200 and information of corresponding priority. For example, the information indicates high priority. The LTE 200 determines whether to make a switch from the first mobile network to the second mobile network (S411). For example, the UE 200 determines that the switch is made.

The UE 200 transmits, to the base station 100, a message for a notification of the switch (S413). For example, the message is an RRC message for long-time switching. The UE 200 receives an ACK (for example, an RLC ACK or an HARQ ACK) corresponding to the message (S415) and transitions to the RRC state (for example, RRC inactive state) (S417).

The UE 200 transmits a paging response to the base station 40 (S419). After that, the UE 200 starts communication in the second mobile network (S421).

The base station 100 notifies the network node 300 of the switch in response to the reception (S413) of the message from the LTE 200 (S423) and the network node 300 stops transmitting data to the LTE 200 and receiving data from the LTE 200 (S425). The base station 100 transmits a response to the message to the LTE 200 (S427) and causes the LTE 200 to transition to the RRC inactive state in the base station 100 (S429).

In particular, the processes of steps S417 to S421 and the processes of steps S423 to S429 may be performed in parallel.

### <5. Modification Examples>

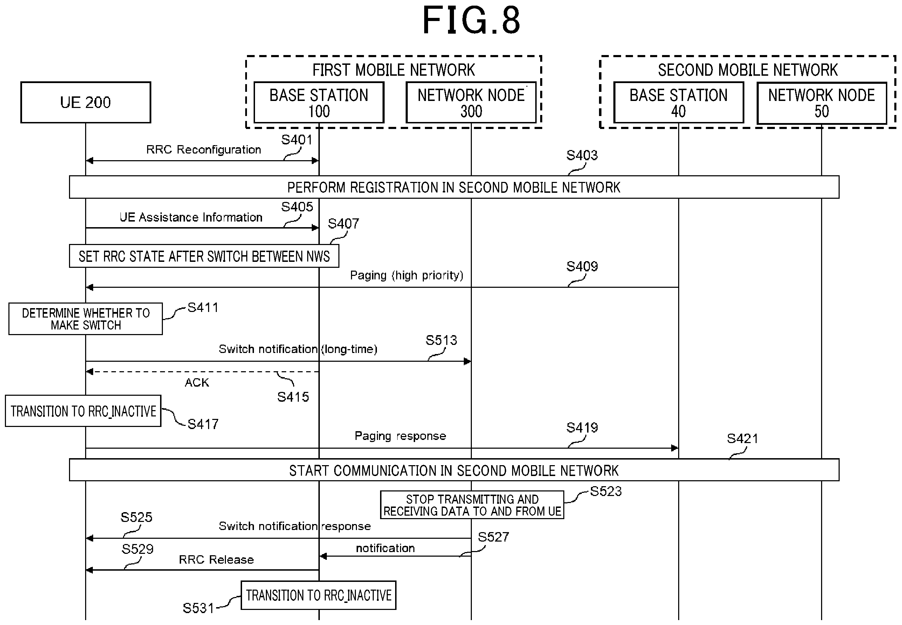

First to fourth modification examples according to embodiments of the present disclosure will be described with reference to FIG. 8. Note that two or more of these modification examples may be combined.

### (1) First Modification Example

In the above-described example of embodiments of the present disclosure, the UE 200 (communication processing unit 233) transmits, to the first mobile network, the message for the notification of the switch from the first mobile network to the second mobile network. The message is an RRC message for the notification of the switch. However, the message according to embodiments of the present disclosure is not limited to this example.

In the first modification example of embodiments of the present disclosure, the message may be an NAS message for the notification of the switch. In this case, the LTE 200 (communication processing unit 233) may transmit the message to the network node 300 in the core network 30 of the first mobile network.

### - Flow of Processing

An example of processing according to the first modification example of embodiments of the present disclosure will be described with reference to FIG. 8. Note that only a difference between the example of FIG. 8 and the example of FIG. 7 will be described here and duplicate descriptions will be omitted.

The UE 200 transmits the message for the notification of the switch to the network node 300 via the base station 100 (S513). For example, the message is an NAS message for long-time switching.

The network node 300 stops transmitting data to the UE 200 and receiving data from the UE 200 in response to the reception (S513) of the message from the UE 200 (S523), and transmits a response to the message to the UE 200 (S525). Further, the network node 300 notifies the base station 100 of the switch (S527).

The base station 100 transmits an RRC Release message to the UE 200 (S529) and causes the LTE 200 to transition to the RRC inactive state in the base station 100 (S531).

In particular, the processes of steps S417 to S421 and the processes of steps S523 to S531 may be performed in parallel.

### (2) Second Modification Example

In the above-described example of embodiments of the present disclosure, the UE 200 (communication processing unit 233) transmits the UE Assistance Information message including the state transition information to the base station 100 in response to the registration of the UE 200 in the second mobile network. However, the transmission of the state transition information according to embodiments of the present disclosure is not limited to this example alone.

In the second modification example of embodiments of the present disclosure, the base station 100 (communication processing unit 143) may transmit, to the LTE 200, trigger information indicating at least one of a plurality of triggers for transmitting the LTE Assistance Information message. As an example, the base station 100 (communication processing unit 143) may transmit an RRC Reconfiguration message including the trigger information to the UE 200.

The LTE 200 (communication processing unit 233) may receive the trigger information from the base station 100. As an example, the UE 200 (communication processing unit 233) may receive the RRC Reconfiguration message including the trigger information from the base station 100. The UE 200 (communication processing unit 233) may transmit the UE Assistance Information message to the base station 100 in response to the at least one trigger indicated by the trigger information.

The plurality of triggers may include the registration of the UE 200 in the second mobile network.

This, for example, allows the UE 200 to transmit the state transition information to the base station 100 in response to a trigger other than the registration in the second mobile network.

### (3) Third Modification Example

In the above-described example of embodiments of the present disclosure, the UE 200 transitions to an RRC state indicated by the state transition information when making a switch from the first mobile network to the second mobile network. However, the transition according to embodiments of the present disclosure is not limited to this example alone.

In the third modification example of embodiments of the present disclosure, in a case where the UE 100 does not transmit the state transition information to the base station 100, the UE 100 may transition to the RRC idle state at the time of the switch. This, for example, makes it possible to make a fast switch to the second network even in a case where the state transition information is not transmitted.

### (4) Fourth Modification Example

In the above-described example of embodiments of the present disclosure, the system 1 is a system compliant with the TSs of 5G or NR. However, the system 1 according to embodiments of the present disclosure is not limited to this example.

In the fourth modification example of embodiments of the present disclosure, the system 1 may be a system compliant with other TSs in 3GPP. As an example, the system 1 may be a system compliant with TSs of long term evolution (LTE), LTE advanced (LTE-A), or 4G and the base station 100 may be an evolved node B (eNB). Alternatively, the base station 100 may be an ng-eNB. As another example, the system 1 may be a system compliant with TSs of 3G and the base station 100 may be a Node B. As yet another example, the system 1 may be a system compliant with TSs of the next generation (for example, 6G).

Alternatively, the system 1 may be a system compliant with TSs of another standardization organization for mobile communications.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in a process described in the present specification do not necessarily have to be executed chronologically in the order described in the flowchart or the sequence diagram. For example, steps in a process may be executed in an order different from the order described as the flowchart or the sequence diagram, or may be executed in parallel. In addition, one or more steps in a process may be removed, or one or more further steps may be added to the process.

For example, there may be provided a method including the operations of one or more components of an apparatus described in the present specification, and there may be provided a program for causing a computer to execute the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (UE) may be referred to by another name such as mobile station, mobile terminal, mobile apparatus, mobile unit, subscriber station, subscriber terminal, subscriber apparatus, subscriber unit, wireless station, wireless terminal, wireless apparatus, wireless unit, remote station, remote terminal, remote apparatus, or remote unit.

For example, in the present disclosure, "transmit" may mean performing processing of at least one layer in a protocol stack used for transmission, or physically transmitting signals wirelessly or by wire. Alternatively, "transmit" may mean a combination of performing the processing of the at least one layer and physically transmitting signals wirelessly or by wire. Similarly, "receive" may mean performing processing of at least one layer in a protocol stack used for reception, or physically receiving signals wirelessly or by wire. Alternatively, "receive" may mean a combination of performing the processing of the at least one layer and physically receiving signals wirelessly or by wire. The at least one layer may be regarded as at least one protocol.

For example, in the present disclosure, "obtain/acquire" may mean obtaining/acquiring information from stored information, obtaining/acquiring information from information received from another node, or obtaining/acquiring information by generating the information.

For example, in the present disclosure, "include" and "comprise" do not mean that only listed items are included, but mean that only listed items may be included or a further item may be included in addition to the listed items.

For example, in the present disclosure, "or" does not mean exclusive OR, but means inclusive OR.

Note that the technical features included in the above-described embodiments may be represented as the following features. Naturally, the present disclosure is not limited to the following features.

### (Feature 1)

A user equipment (200) comprising:
an information obtaining unit (231) configured to obtain state transition information indicating a radio resource control, RRC, state to which the user equipment is to transition when making a switch from a first mobile network to a second mobile network; and
a communication processing unit (233) configured to transmit a UE Assistance Information message including the state transition information to a base station (100) in the first mobile network in response to registration of the user equipment in the second mobile network.

### (Feature 2)

The user equipment according to Feature 1, wherein the RRC state is either an RRC idle state or an RRC inactive state.

### (Feature 3)

The user equipment according to Feature 1 or 2, wherein the communication processing unit is configured to receive an RRC Reconfiguration message from the base station, the RRC Reconfiguration message including configuration information for configuring the user equipment to transmit the state transition information.

### (Feature 4)

The user equipment according to any one of Features 1 to 3, wherein the communication processing unit is configured to transmit, to the first mobile network, a message for a notification of the switch.

### (Feature 5)

The user equipment according to Feature 4, wherein
the message is an RRC message for the notification of the switch, and
the communication processing unit is configured to transmit the message to the base station.

### (Feature 6)

The user equipment according to Feature 4, wherein
the message is a non-access stratum, NAS, message for the notification of the switch, and
the communication processing unit is configured to transmit the message to a network node (300) in a core network (30) of the first mobile network.

### (Feature 7)

The user equipment according to any one of Features 4 to 6, further comprising a control unit (235) configured to cause the user equipment to transition to the RRC state in response to reception of an acknowledgment corresponding to the message for the notification of the switch.

### (Feature 8)

The user equipment according to any one of Features 1 to 7, wherein
the communication processing unit is configured to receive trigger information from the base station, the trigger information indicating at least one of a plurality of triggers for transmitting the UE Assistance Information message,
the communication processing unit is configured to transmit the UE Assistance Information message to the base station in response to at least one trigger indicated by the trigger information, and
the plurality of triggers includes the registration of the user equipment in the second mobile network.

### (Feature 9)

The user equipment according to any one of Features 1 to 8, wherein
the user equipment is capable of being equipped with two or more subscriber identity module, SIM, cards,
the first mobile network corresponds to one of the two or more SIM cards, and
the second mobile network corresponds to another one of the two or more SIM cards.

### (Feature 10)

A base station (100) in a first mobile network, comprising:
a communication processing unit (143) configured to receive, from a user equipment (200), a LTE Assistance Information message including state transition information indicating a radio resource control, RRC, state to which the user equipment is to transition when making a switch from the first mobile network to a second mobile network, the LTE Assistance Information message being transmitted by the user equipment in response to registration of the user equipment in the second mobile network; and
an information obtaining unit (141) configured to obtain the state transition information.

### (Feature 11)

The base station according to Feature 10, wherein the communication processing unit is configured to transmit an RRC Reconfiguration message to the user equipment, the RRC Reconfiguration message including configuration information for configuring the user equipment to transmit the state transition information.

### (Feature 12)

The base station according to Feature 10 or 11, wherein
the communication processing unit is configured to receive, from the user equipment, a message for a notification of the switch, and
the base station further comprises a control unit (145) configured to cause the user equipment to transition to the RRC state in the base station in response to reception of the message for the notification of the switch.

### (Feature 13)

The base station according to any one of Features 10 to 12, wherein
the communication processing unit is configured to transmit, to the user equipment, trigger information indicating at least one of a plurality of triggers for transmitting the UE Assistance Information message, and
the plurality of triggers includes the registration of the user equipment in the second mobile network.

### (Feature 14)

A method performed by a user equipment (200), comprising:
obtaining state transition information indicating a radio resource control, RRC, state to which the user equipment is to transition when making a switch from a first mobile network to a second mobile network; and
transmitting a LTE Assistance Information message including the state transition information to a base station (100) in the first mobile network in response to registration of the user equipment in the second mobile network.

### (Feature 15)

A method performed by a base station (100) in a first mobile network, comprising:
receiving, from a user equipment (200), a UE Assistance Information message including state transition information indicating a radio resource control, RRC, state to which the user equipment is to transition when making a switch from the first mobile network to a second mobile network, the UE Assistance Information message being transmitted by the user equipment in response to registration of the user equipment in the second mobile network; and
obtaining the state transition information.

### (Feature 16)

A program for causing a computer to execute operations of:
obtaining state transition information indicating a radio resource control, RRC, state to which a user equipment (200) is to transition when making a switch from a first mobile network to a second mobile network; and
transmitting a LTE Assistance Information message including the state transition information to a base station (100) in the first mobile network in response to registration of the user equipment in the second mobile network.

### (Feature 17)

A program for causing a computer to execute operations of:
receiving, from a user equipment (200), a UE Assistance Information message including state transition information indicating a radio resource control, RRC, state to which the user equipment is to transition when making a switch from a first mobile network to a second mobile network, the UE Assistance Information message being transmitted by the user equipment in response to registration of the user equipment in the second mobile network; and
obtaining the state transition information.

### (Feature 18)

A non-transitory tangible computer-readable storage medium having stored therein a program for causing a computer to execute operations of:
obtaining state transition information indicating a radio resource control, RRC, state to which a user equipment (200) is to transition when making a switch from a first mobile network to a second mobile network; and
transmitting a LTE Assistance Information message including the state transition information to a base station (100) in the first mobile network in response to registration of the user equipment in the second mobile network.

### (Feature 19)

A non-transitory tangible computer-readable storage medium having stored therein a program for causing a computer to execute operations of:
receiving, from a user equipment (200), a UE Assistance Information message including state transition information indicating a radio resource control, RRC, state to which the user equipment is to transition when making a switch from a first mobile network to a second mobile network, the UE Assistance Information message being transmitted by the user equipment in response to registration of the user equipment in the second mobile network; and
obtaining the state transition information.

## Claims

1. An apparatus (200) comprising
a communication processing unit (233) configured to receive second information for configuring the apparatus to transmit a UE Assistance Information message including first information indicating a radio resource control, RRC, state that is either an RRC idle state or an RRC inactive state,
wherein the communication processing unit is configured to transmit a UE Assistance Information message including the first information to a first network based on the second information before a switch from the first network to a second network by the apparatus in an RRC connected state in the first network.

2. The apparatus according to claim 1, wherein the second information is included in an RRC Reconfiguration message.

3. The apparatus according to claim 1 or 2, wherein the apparatus has capability of supporting two or more subscriber identity modules, SIMs.

4. An apparatus (100) in a first network, comprising
a communication processing unit (143) configured to transmit, to a user equipment, second information for configuring the user equipment to transmit a LTE Assistance Information message including first information indicating a radio resource control, RRC, state that is either an RRC idle state or an RRC inactive state,
wherein the communication processing unit is configured to receive a UE Assistance Information message including the first information from the user equipment, the UE Assistance Information message being transmitted based on the second information before a switch from the first network to a second network by the user equipment in an RRC connected state in the first network.

5. The apparatus according to claim 4, wherein the second information is included in an RRC Reconfiguration message.

6. The apparatus according to claim 4 or 5, wherein the user equipment has capability of supporting two or more subscriber identity modules, SIMs.

7. A method performed by an apparatus (200), comprising:
receiving second information for configuring the apparatus to transmit a UE Assistance Information message including first information indicating a radio resource control, RRC, state that is either an RRC idle state or an RRC inactive state; and
transmitting a LTE Assistance Information message including the first information to a first network based on the second information before a switch from the first network to a second network by the apparatus in an RRC connected state in the first network.

8. The method according to claim 7, wherein the second information is included in an RRC Reconfiguration message.

9. The method according to claim 7 or 8, wherein the apparatus has capability of supporting two or more subscriber identity modules, SIMs.

10. A method performed by an apparatus (100) in a first network, comprising:
transmitting, to a user equipment, second information for configuring the user equipment to transmit a LTE Assistance Information message including first information indicating a radio resource control, RRC, state that is either an RRC idle state or an RRC inactive state; and
receiving a UE Assistance Information message including the first information from the user equipment, the LTE Assistance Information message being transmitted based on the second information before a switch from the first network to a second network by the user equipment in an RRC connected state in the first network.

11. The method according to claim 10, wherein the second information is included in an RRC Reconfiguration message.

12. The method according to claim 10 or 11, wherein the user equipment has capability of supporting two or more subscriber identity modules, SIMs.
